Europäisches Patentamt

**European Patent Office**

**Office européen des brevets**

(11) Numéro de publication: **0 116 239**
**A2**

# (12) DEMANDE DE BREVET EUROPEEN

(21) Numéro de dépôt: **83400522.5**

(51) Int. Cl.³: **F 24 F 3/14**

(22) Date de dépôt: **14.03.83**

(30) Priorité: **03.02.83 FR 8301697**

(43) Date de publication de la demande:
**22.08.84 Bulletin 84/34**

(84) Etats contractants désignés:
**AT BE CH DE FR GB IT LI LU NL SE**

(71) Demandeur: **MUTANDIS Société à responsabilité limitée**
**15, rue d'Ablis Prunay**
**F-78660 Ablis(FR)**

(72) Inventeur: **Cuissard, Jean**
**15, rue d'Ablis**
**Prunay F-78660 Ablis(FR)**

(74) Mandataire: **Brot, Philippe et al,**
**CABINET BROT et JOLLY 83, rue d'Amsterdam**
**F-75008 Paris(FR)**

(54) **Dispositif pour absorber l'humidité de l'air ambiant d'un local.**

(57) La présente invention a pour objet un dispositif pour absorber l'humidité d'un local à l'aide d'un sel hygroscopique.

Ce dispositif est constitué par un récipient (1) dont la paroi latérale est munie de perforations (5), sur la partie supérieure duquel est disposée une nacelle amovible (2) destinée à recevoir le sel hygroscopique (6) et réalisée en une matière perméable et qui est fermé par un couvercle perforé (3).

EP 0 116 239 A2

Croydon Printing Company Ltd

## Dispositif pour absorber l'humidité de l'air ambiant d'un local.

La présente invention concerne un dispositif pour absorber l'humidité contenue dans l'air d'un local.

Il est connu d'absorber l'humidité ambiante dans un local en plaçant dans celui-ci une certaine quantité d'un sel très hygroscopique, par exemple de chlorure de calcium. Ce sel se charge d'eau à partir d'un certain degré hygrométrique de l'air ambiant, se sature en eau et se combine ensuite avec celle-ci pour donner une solution de chlorure de calcium hydraté.

Le plus souvent, jusqu'à présent, le sel hygroscopique est enfermé dans une cartouche perforée en matière plastique qui est placée sur des chevalets. Cette cartouche, qui est relativement coûteuse, ne peut pratiquement pas être rechargée, de sorte qu'il est nécessaire de la remplacer par une cartouche neuve lorsque le sel qu'elle contient a été consommé. Par ailleurs, pour être efficace, le sel doit se présenter sous la forme d'une couche d'épaisseur limitée. Il en résulte que la cartouche a nécessairement un volume réduit et ne peut donc être utilisée pour déshumidifier un local de grandes dimensions.

La présente invention a pour objet un dispositif pour absorber l'humidité d'un local ou déshumidificateur, à l'aide d'un sel hygroscopique, qui peut au contraire être facilement rechargé et dans lequel le volume de sel peut être important.

Le dispositif selon l'invention se caractérise en ce qu'il comporte, sous forme de récipient portable, un système d'absorption constitué par au moins une couche de sel hygroscopique reçue dans une nacelle perméable disposée en travers du récipient et des moyens d'organisation d'une circulation d'air, conduisant l'air ambiant extérieur au récipient à traverser la couche du système d'absorption, le fond du récipient formant sous ce système un réservoir de collecte de la solution liquide

résultant de l'absorption de l'humidité de l'air par le sel hygroscopique.

Dans un mode de réalisation avantageux de l'invention, le système d'absorption peut être constitué de deux couches superposées comprenant une couche supérieure de sel hygroscopique et une couche inférieure de matériau à grande surface de contact favorisant les échanges gaz/liquide.

Les moyens d'organisation de la circulation peuvent simplement comprendre un ou plusieurs orifices d'admission d'air ménagés à travers la paroi du récipient à un niveau intermédiaire entre le fond de collecte de la solution liquide et la couche inférieure du système d'absorption, et un ou plusieurs orifices de sortie d'air ménagés à travers la paroi du récipient à un niveau supérieur à celui de la couche supérieure du système d'absorption.

Les orifices de sortie d'air sont avantageusement ménagés à travers un couvercle amovible du récipient.

Lorsque le récipient est placé dans une enceinte humide, une circulation d'air s'établit à travers les perforations du couvercle, les deux couches du système d'absorption et les perforations de la paroi latérale du récipient. L'humidité est absorbée par le sel qui passe progressivement en solution. Celle-ci traverse la nacelle, et vient au contact de la couche inférieure, dans laquelle l'air humide abandonne au passage une partie de sa vapeur d'eau pour saturer la solution.

Lorsque le sel a été consommé, il suffit de vider le récipient après avoir retiré la nacelle et de remettre du sel dans cette nacelle.

Le dispositif peut comporter en outre un ventilateur de circulation d'air ambiant à l'admission dans le récipient, ce qui permet d'imposer une vitesse de circulation forcée en cas d'humidité importante.

Par ailleurs, le système d'absorption peut utilement comprendre une première grille ajourée faisant partie de la nacelle de réception du sel hygroscopique, de préférence amovible, et une deuxième grille ajourée supportant la couche inférieure du système d'absorption. La nacelle peut avantageusement comporter en outre des tubes formant des cheminées d'aération à travers la couche supérieure du système d'absorption. Le matériau de la couche inférieure du système d'absorption peut être notamment constitué par des anneaux Ræschig. On comprendra qu'en général, conformément aux dimensions habituelles du sel hygroscopique (chlorure de calcium en particulier) et à celles de tels anneaux, les grilles seront choisies de sorte que les ajours de la deuxième grille soient de dimensions nettement supérieures aux ajours de la première grille.

D'autres caractéristiques et avantages de l'invention apparaîtront plus clairement à la lumière de la description ci-après faite en référence aux figures annexées dans lesquelles :

La figure 1 est une vue en perspective du déshumidificateur selon un premier mode de réalisation de l'invention ;

La figure 2 en est une vue en coupe verticale;et

La figure 3 est une vue en coupe du dispositif selon un second mode de réalisation.

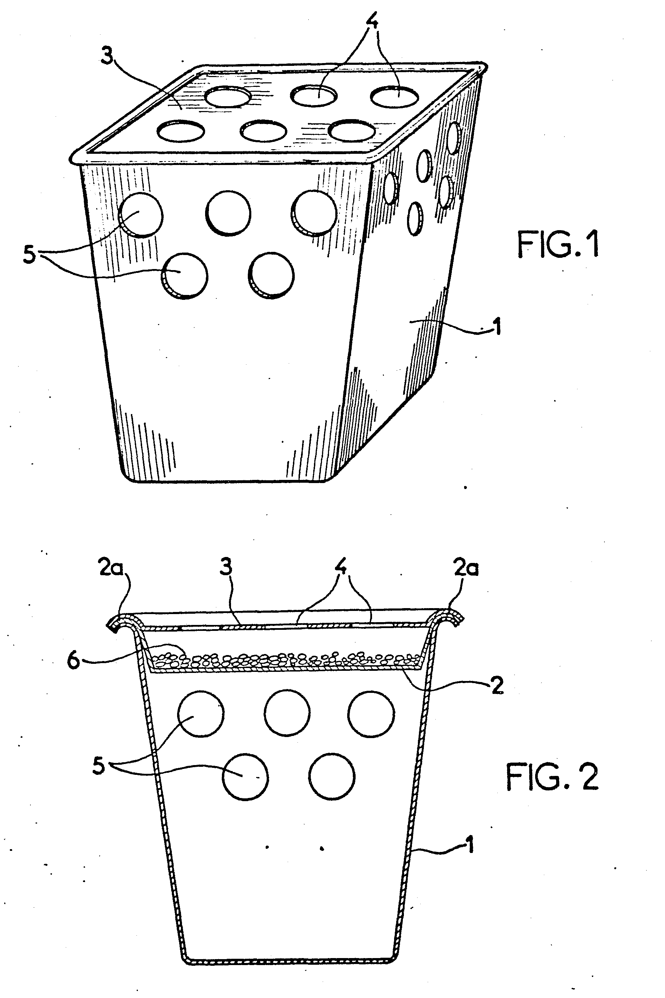

Le déshumidificateur représenté aux figures 1 et 2 comprend un récipient 1 à la partie supérieure duquel est disposée une nacelle amovible 2. Celle-ci, qui est réalisée en une matière perméable au liquide, par exemple en un tissu en matière plastique, comporte à sa périphérie un rebord 2a qui repose sur le bord du récipient 1.

Le récipient 1 est fermé par un couvercle 3 qui est muni de perforations 4 et peut être solidaire de la nacelle 2 ou indépendant de celle-ci. Sa paroi latérale comporte des perforations 5 situées au-dessous du fond de la nacelle.

Pour utiliser ce dispositif, on place un sel hygroscopique, par exemple du chlorure de calcium dans la nacelle 2, comme indiqué en 6.

Lorsque le récipient 1 est placé dans une atmosphère humide, le sel 6 absorbe progressivement l'humidité et forme une solution qui traverse la nacelle 2 et s'écoule dans le fond du récipient 1.

Lorsque le sel a été consommé, il suffit de recharger la nacelle, ce qui peut être fait en y versant le sel par les ouvertures 4. Lorsque le récipient 1 contient suffisamment de solution, on retire le couvercle 3 ainsi que la nacelle 2 et on vide le récipient.

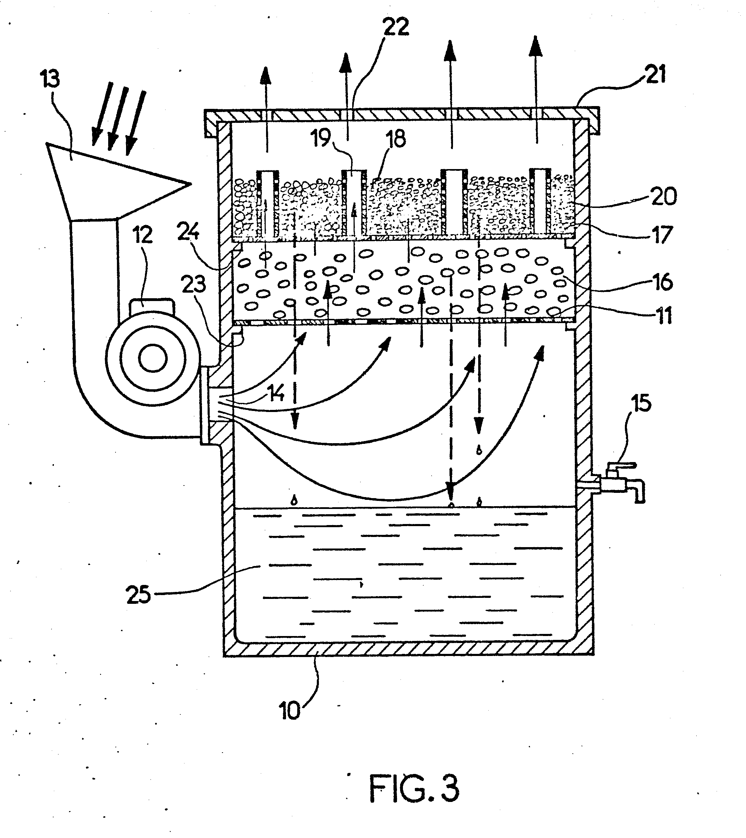

Le déshumidificateur représenté à la figure 3 comprend un récipient 10, cylindrique ou en tronc de pyramide (cylindrique sur la figure), comportant à mi-hauteur du récipient, un logement extérieur pour adapter un moteur 12 (se branchant sur le secteur) qui permet l'aspiration de l'air du local à traiter par une bouche d'aspiration 13 et qui fait pénétrer l'air aspiré dans l'enceinte du récipient 10 par au moins un orifice ou ouverture 14. L'ouverture 14 débouche dans le récipient en dessous d'un grille très ajourée 11 et au-dessus du niveau d'un robinet de vidange 15.

Les ajours de la grille ajourée 11 sont tels qu'une couche d'anneaux Raschig 16 reposant sur cette grille ne puisse passer à travers. Les anneaux Raschig 16 sont par exemple du type connu sous la désignation commerciale PAL. Au-dessus de la couche 16 se trouve une nacelle 17, amovible, constituée par une autre grille ajourée portant une série de tubes 18, également ajourés, qui se prolongent verticalement en forme de cheminées 19 vers le dessus du récipient. Ces cheminées sont de diamètre restreint par rapport à la surface de la nacelle 17. Dans celle-ci, autour des cheminées, se trouve disposée une couche de sel hygroscopique 20, tel que du chlorure de calcium.

Enfin, le récipient 10 est fermé à sa partie supérieure par un couvercle amovible 21, pourvu d'une pluralité d'orifices de sortie de l'air 22. On comprend que l'ensemble des deux couches, la couche supérieure de sel hygroscopique 20 et la couche d'anneaux Raschig 16, constitue un système d'absorption en travers du récipient 10, interposé sur le circuit d'air. On sait que

0116239

les anneaux Raschig forment un matériau à grande surface de contact qui favorise les échanges entre gaz et liquide, donc ici entre l'air humide et la solution saline résultant de l'absorption de l'eau de l'air par le sel hygroscopique. Compte-tenu des dimensions relatives entre les deux matériaux des couches, les ajours de la grille inférieure 11 sont de dimensions nettement supérieures aux ajours de la grille de la nacelle 17. Les grilles sont chacune supportées sur un épaulement annulaire interne du récipient 10, respectivement 23 et 24. La nacelle 17 est ainsi aisément amovible. Naturellement, la grille de la nacelle 17 présente des ajours de dimensions inférieures à la taille des cristaux du sel hygroscopique mais de taille suffisante pour permettre le passage de la solution de chlorure de calcium hydraté, donc telles que les gouttes ne soient pas retenues par capillarité.

En fonctionnement, l'air humide aspiré par le moteur est refoulé dans le récipient et remonte à travers les anneaux Raschig sur le sel. Le sel posé sur la grille est léché par l'air humide qui traverse autant que possible la couche de sel 20. Les cheminées sont néanmoins souhaitables pour faciliter la circulation de l'air et augmenter le contact entre sel et air humide. L'humidité absorbée par le sel le fait passer progressivement en solution au fur et à mesure que le sel absorbe la vapeur d'eau. La solution non encore saturée s'écoule lentement à travers la grille et passe au contact des anneaux. Ceux-ci favorisent le contact et l'échange entre la solution non encore saturée et l'air humide, qui abandonne au passage une partie de sa vapeur d'eau pour saturer la solution.

La solution saturée 25 s'écoule à travers la grille 11 et est recueillie dans le fond du récipient 10. Le robinet de vidange 15 permet de vider le récipient lorsque le niveau de solution est trop élevé.

L'appareil peut également fonctionner à allure réduite si l'on ne branche pas le moteur. La quantité d'air

0116239

absorbée par heure est réduite et la capacité de traitement de l'appareil également. En variante, on peut aussi ne pas prévoir de possibilité de brancher un ventilateur à l'entrée des orifices 14, auquel cas il est souhaitable d'augmenter le nombre et les dimensions de ces orifices.

Il est bien évident que d'autres variantes peuvent être apportées au fonctionnement et à la conception du dispositif et que toute modification à la portée de l'homme de l'art fait également patie de l'esprit de l'invention.

REVENDICATIONS

1.- Dispositif pour absorber l'humidité d'un local à l'aide d'un sel hygroscopique, caractérisé en ce qu'il comporte, sous forme d'un récipient (1; 10) portable, un système d'absorption constitué par au moins une couche de sel hygroscopique (6; 20) reçue dans une nacelle perméable disposée en travers dudit récipient, et des moyens d'organisation d'une circulation d'air (4, 5; 14,22) conduisant l'air ambiant extérieur au récipient à traverser la couche du système d'absorption, le fond du récipient formant sous ce système un réservoir de collecte de la solution liquide (25) résultant de l'absorption de l'humidité de l'air par le sel hygroscopique.

2.- Dispositif selon la revendication 1, caractérisé en ce que le système d'absorption est constitué de deux couches superposées comprenant une couche supérieure de sel hygroscopique (20) et une couche inférieure de matériau à grande surface de contact (16) favorisant les échanges gaz/liquide.

3.- Dispositif selon l'une des revendications 1 et 2, caractérisé en ce que lesdits moyens d'organisation de la circulation de l'air comportent un ou plusieurs orifices d'admission d'air (5; 14) ménagés à travers la paroi du récipient (1; 10) à un niveau intermédiaire entre le fond de collecte de la solution liquide et le système d'absorption, et un ou plusieurs orifices de sortie d'air (4; 22) ménagés à travers la paroi du récipient à un niveau supérieur à celui du système d'absorption.

4.- Dispositif selon la revendication 2, caractérisé en ce que les orifices de sortie d'air (4; 22) sont ménagés à travers un couvercle amovible (3; 21) du récipient.

5.- Dispositif selon l'une des revendications précédentes, caractérisé en ce qu'il comporte en outre un ventilateur (12) de circulation de l'air ambiant à l'admission dans le récipient.

6.- Dispositif selon l'une des revendications précédentes, caractérisé en ce que le système d'absorption comprend une première grille ajourée (17) faisant partie de la nacelle de réception du sel hygroscopique et une deuxième grille ajourée (11) supportant la couche inférieure (16) du système d'absorption.

7.- Dispositif selon la revendication 6, caractérisé en ce que ladite nacelle comporte en outre des tubes (18) formant des cheminées d'aération (19) à travers la couche supérieure du système d'absorption.

8.- Dispositif selon l'une des revendications 6 ou 7, caractérisé en ce que ladite nacelle (3, 17) est réalisée sous forme amovible.

9.- Dispositif selon l'une des revendications 6 à 8, caractérisé en ce que les ajours de la deuxième grille (11) sont de dimensions nettement supérieures aux ajours de la première grille (17).

10.- Dispositif selon l'une des revendications 2 à 9, caractérisé en ce que le matériau de la couche inférieure du système d'absorption est constitué par des anneaux Raschig (16).

11.- Dispositif selon l'une des revendications précédentes, caractérisé en ce que le récipient comporte un robinet (15) de vidange de la solution liquide recueillie (25).

0116239

FIG.1

FIG. 2

FIG.3